# FASCICULE DE BREVET EUROPEEN

(11) **EP 0 356 312 B1**
(45) Date de publication et mention de la délivrance du brevet: **07.06.1995**
(21) Numéro de dépôt: 89402279.7
(22) Date de dépôt: 11.08.1989
(51) Int. Cl.: A47J 41/00

(54) **Conteneur isotherme, plus spécialement destiné au transport et à la distribution de produits alimentaires liquides**
Isolierter Behälter für den Transport und die Ausgabe von Flüssigkeiten
Insulated container for transporting and dispensing liquids

(30) Priorité: 18.08.1988 FR 8811001
(43) Date de publication de la demande: 28.02.1990
(73) Titulaire: De Buyer, Hervé René Jacques Marie, Le Val d'Ajol (Vosges) (FR)
(72) Inventeur: De Buyer, Hervé René Jacques Marie, Le Val d'Ajol (Vosges) (FR)
(74) Mandataire: Herrburger, Pierre

(56) Documents cités:
- FR-A- 727 859
- FR-A- 2 554 420
- FR-A- 2 594 415
- FR-A- 2 601 656

## Description

L'invention se rapporte à un conteneur isotherme plus spécialement destiné au transport et à la distribution de produits alimentaires liquides.

Dans de nombreuses collectivités (hôpitaux, cantines d'entreprises, armées ...) les repas sont préparés à partir d'une cuisine centrale avant d'être distribués, souvent plusieurs heures plus tard à des consommateurs qui peuvent être, géographiquement, relativement éloignés. Pour permettre à ces derniers de disposer néanmoins de repas chauds ou froids et présentant toutes les garanties nécessaires du point de vue de l'hygiène, il a été nécessaire de fabriquer des conteneurs isothermes, dans lesquels les repas peuvent être stockés et transportés.

Ces conteneurs se composent d'un corps de conteneur de section quelconque (généralement ronde, carrée ou rectangulaire, muni d'un fond et d'une paroi latérale entourant ce dernier, ainsi que d'un couvercle coopérant notamment avec un joint d'étanchéité et/ou avec des organes de fermeture pour permettre de fermer le corps de conteneur de façon étanche ; de tels conteneurs qui peuvent, en outre, être munis de poignées facilitant leur manipulation, peuvent avoir des dimensions très importantes, pouvant aller jusqu'à 50 litres et même au-delà.

Les premiers conteneurs qui sont apparus sur le marché dits "marmites norvégiennes" étaient entièrement métalliques ; ils se sont avérés très satisfaisants du point de vue de l'hygiène et de la facilité de nettoyage, mais présentaient l'inconvénient d'être relativement lourds et peu résistants à la déformation, donc sensibles aux chocs ; il s'agit là d'inconvénients relativement importants étant donné que ces conteneurs doivent subir de nombreuses et importantes manipulations, pouvant aller jusqu'à un parachutage lorsque ceux-ci sont destinés à une armée en campagne.

Pour remédier à ces inconvénients, on a déjà proposé de remplacer les conteneurs métalliques par des conteneurs entièrement en matière plastique, plus légers et plus résistants. De tels conteneurs ne se sont, toutefois, pas montrés eux non plus entièrement satisfaisants, étant donné que les matières plastiques se rayent facilement et que chaque rayure risque de donner lieu à des inclusions de produits alimentaires, de ferments, de germes ... difficilement nettoyables, et qui, à la longue risquent d'altérer les aliments transportés. Il s'agit là d'un inconvénient particulièrement grave dans le cas du transport d'aliments liquides tels que le lait.

Par ailleurs, lorsqu'un conteneur en matière plastique a séjourné fermé pendant un certain temps, c'est-à-dire sans altération, il risque de conserver et de transmettre aux aliments des odeurs désagréables.

A partir de cet art antérieur, on a eu l'idée, conformément au brevet FR 86 10 337, de mettre au point un conteneur isotherme offrant, à la fois, les avantages des conteneurs métalliques et des conteneurs en matière plastique, sans en présenter les inconvénients : il a ainsi été proposé un conteneur isotherme du type susmentionné, dans lequel le couvercle et le corps de conteneur sont constitués par une paroi interne métallique, le cas échéant amovible, notamment en acier inoxydable, destinée à être en contact avec les produits alimentaires, et une paroi externe en matière plastique ou en un produit assimilable, notamment en polyéthylène haute densité, ces deux parois étant séparées par une couche d'un isolant thermique, notamment de mousse de polyuréthane, injecté entre les deux parois.

Ce conteneur mixte s'est avéré particulièrement satisfaisant pour le transport d'aliments solides en effet, par rapport aux articles entièrement métalliques, il présente l'avantage d'être plus léger et plus résistant à la déformation et aux chocs, et, par rapport aux articles entièrement en matière plastique, la présence d'une enveloppe interne métallique notamment en acier inoxydable est de nature à garantir la bonne tenue des aliments du point de vue odeur et oxydation et de faciliter le nettoyage.

Pour ne pas limiter l'utilisation de tels conteneurs au transport de produits solides, on a proposé de les modifier, en montant un robinet à la partie inférieure de leur face latérale, afin de les adapter au transport de produits alimentaires liquides. Cette modification n'a cependant pas donné satisfaction à l'usage, étant donné qu'un même conteneur ne peut ainsi pas être utilisé, selon les besoins, pour le transport d'aliments solides ou d'aliments liquides. Cette impossibilité oblige en effet à augmenter, dans une large mesure, le nombre de conteneurs dont doit disposer un utilisateur donné, ce qui entraîne parallèlement une augmentation difficilement acceptable de leur coût, au niveau de leur utilisation, et surtout au niveau de leur fabrication : les corps de conteneurs munis de robinets et non munis de robinets doivent en effet être fabriqués par des processus totalement distincts et par suite pour des raisons de rentabilité économique, il est nécessaire de fabriquer, à partir d'un même moule, un nombre double de conteneurs dont la commercialisation peut poser quelques problèmes ; cet inconvénient est d'autant plus important que les utilisateurs souhaitent pouvoir choisir entre des conteneurs de différentes dimensions en fonction de leur besoins et que, pour chaque dimension, deux séries de conteneurs doivent être fabriquées, à savoir une série avec robinet et une série sans robinet.

La présente invention a pour objet de remédier à ces inconvénients en proposant un conteneur isotherme du type susmentionné, plus spécialement destiné au transport et à la distribution de produits alimentaires liquides, dans lequel le robinet indispensable au soutirage du liquide n'est pas monté, de manière classique, à la partie inférieure du corps de conteneur.

Selon l'invention, ce conteneur isotherme est caractérisé en ce que le couvercle est muni, sur sa face externe, d'un robinet permettant le soutirage du liquide alimentaire contenu dans le corps de conteneur lorsque, à partir de sa position de stockage normale dans laquelle il repose sur son fond, le conteneur est basculé dans une position de distribution dans laquelle il s'appuie sur sa paroi latérale.

Cette mise en place du robinet sur le couvercle et non sur le corps de conteneur permet de diminuer dans une large mesure le coût associé au stockage et à la distribution d'aliments dans les collectivités, étant donné qu'un même conteneur peut être utilisé pour le transport de produits solides ou de produits liquides selon qu'on le ferme avec un couvercle muni ou non d'un robinet, et surtout, qu'un même couvercle peut être utilisé pour fermer des corps de conteneurs de tailles différentes, réduisant ainsi notablement les stocks devant être prévus au niveau de la fabrication.

Pour que le conteneur susmentionné conforme à l'invention donne pleine et entière satisfaction, il est bien entendu nécessaire que le liquide contenu dans le corps de conteneur puisse être soutiré dans sa totalité ; dans ce but, et selon une autre caractéristique de l'invention, le robinet est monté à la périphérie du couvercle de façon à pouvoir se trouver à la partie inférieure du conteneur lorsque celui-ci est basculé en position de distribution ; pour favoriser le soutirage de la totalité du liquide, il peut parfois être nécessaire, en fin d'opération, de soulever le conteneur par sa partie arrière afin de rassembler le liquide au niveau du robinet.

Pour pouvoir soutirer le liquide dans des conditions satisfaisantes, il est, par ailleurs, nécessaire, conformément à l'invention, de prévoir sur le couvercle une prise d'air, notamment un méat muni d'une soupape percé soit verticalement soit obliquement (considéré en position de stockage normale) et coopérant avec le robinet lors du soutirage de liquide.

Comme il a déjà été mentionné ci-dessus, le conteneur conforme à l'invention est destiné à subir des manipulations pouvant être particulièrement brutales, et doit, par suite, être très résistant aux chocs. Or, dans les conteneurs classiques destinés au transport de liquides, le robinet constitue une saillie correspondant à un point de moindre résistance pouvant gêner les gerbages et surtout pouvant entraîner un endommagement, voire un perçage donc une destruction, du conteneur en cas de chute à ce niveau. L'un des objets de l'invention est également de remédier à cet inconvénient.

A cet effet, et selon une caractéristique préférentielle de l'invention, la face externe du couvercle est munie, sur sa périphérie, d'un renfoncement dans lequel est logé le robinet, dans sa totalité.

Grâce à la présence de ce renfoncement, le conteneur isotherme qui fait l'objet de l'invention ne présente aucune partie en saillie de nature à gêner le gerbage, ou à entraîner une détérioration par suite de chocs, notamment dans le cas de conteneurs à usage militaire directement parachutés sur le lieu même de leur utilisation.

Comme il a déjà été indiqué ci-dessus, le conteneur conforme à l'invention peut avoir une forme quelconque sans pour cela sortir du cadre de l'invention ; la forme cylindre s'est cependant révélée particulièrement satisfaisante, notamment du point de vue de la facilité de fabrication ; cette forme présente toutefois l'inconvénient de créer une instabilité par suite de roulements lorsque le conteneur est basculé en position de distribution.

Pour remédier à cet inconvénient, et stabiliser le conteneur dans cette position, le couvercle est muni sur sa périphérie de pattes faisant saillie vers l'extérieur, notamment de part et d'autre du renfoncement dans lequel est logé le robinet pour stabiliser le conteneur en position de distribution.

Les caractéristiques du conteneur isotherme qui fait l'objet de l'invention seront décrites plus en détail en se référant aux dessins annexés dans lesquels :
- la figure 1 est une coupe longitudinale du conteneur isotherme en position de stockage normale,
- la figure 2 est une vue correspondant à la figure 1 mais dans laquelle le conteneur isotherme se trouve en position de distribution,
- la figure 3 est un schéma représentant le couvercle en position de distribution.

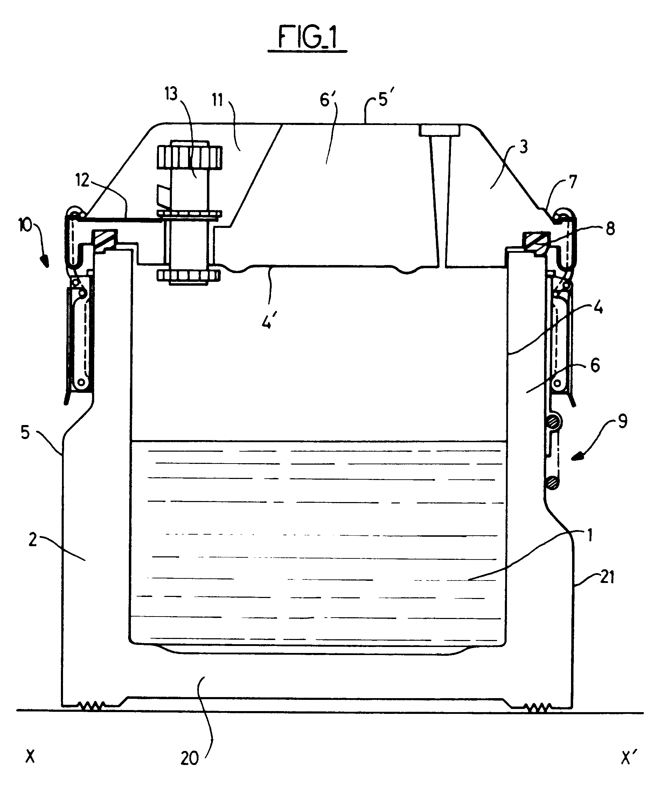

Les figures 1 à 3 se rapportent à l'exemple particulier d'un conteneur cylindrique ; il ne s'agit là, bien entendu, que d'une configuration choisie à titre d'exemple qui ne doit, bien entendu, en aucune façon être considérée comme étant limitative de l'invention.

Selon la figure 1, le conteneur qui est destiné à permettre le stockage, le transport et la distribution d'un liquide alimentaire 1 est schématiquement constitué d'un corps de conteneur 2 ainsi que d'un couvercle 3. Le corps de conteneur 2 est muni d'un fond circulaire 20 par lequel, en position de stockage normale, il repose sur un support quelconque X-X′ et qui est entouré, sur sa périphérie, par une face latérale 21 de forme essentiellement cylindrique. Le corps de conteneur 2 est constitué par une paroi interne en acier inoxydable 4 en contact avec le liquide 1, et d'une paroi externe 5 résistant aux chocs en polyéthylène haute densité. Les parois 4 et 5 sont séparées par une couche de mousse de polyuréthane 6 injectée entre celles-ci et faisant office d'isolant thermique.

D'une manière similaire, le couvercle 3 comporte une paroi interne 4′ en acier inoxydable et une paroi externe 5′ en polyéthylène haute densité qui sont séparées par une couche de mousse de polyuréthane 6′ injectée entre ces deux parois.

Sans sortir du cadre de l'invention, le couvercle pourrait être constitué de deux parois en polyéthylène haute densité sur l'une desquelles serait fixée une enveloppe métallique.

Pour permettre de fermer de façon étanche le corps de conteneur 2, les parties en regard de ce dernier ainsi que du couvercle 3 sont munis d'épaulements 7 permettant la mise en place d'un joint annulaire 8. Il est, par ailleurs, prévu une poignée 9 ainsi que des organes de fermeture 10. Ces derniers, qui peuvent notamment être similaires à ceux mentionnés dans le brevet français 86 10 337 ne seront pas décrits ici en détail dans un but de brèveté.

Selon les figures 1 à 3, le couvercle 3 est muni, sur sa périphérie, d'un renfoncement 11 en forme de secteur circulaire formé dans le polyéthylène 5′ et dans le polyuréthane 6′ et définissant une surface en retrait 12 au niveau de laquelle est monté un robinet 13 permettant la distribution du liquide 1.

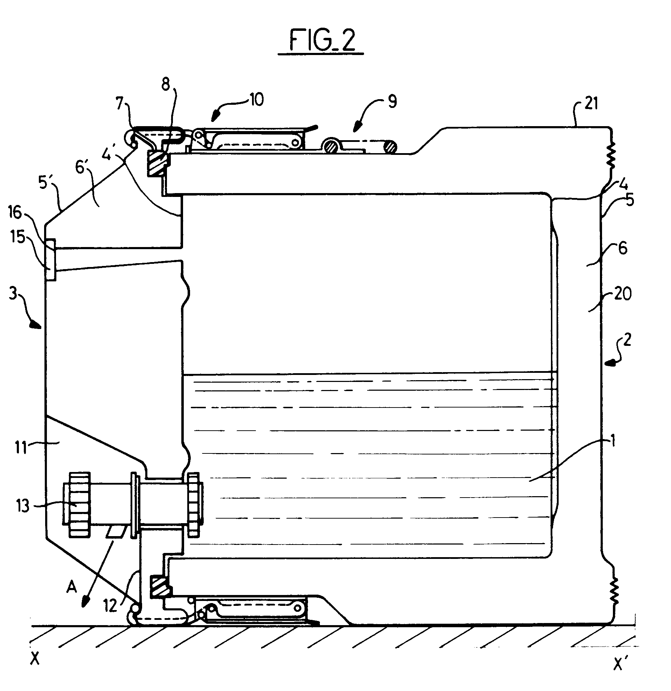

Pour permettre la mise en oeuvre de celle-ci, le corps de conteneur 2 est basculé, à partir de sa position de stockage normale représentée sur la figure 1, dans une position de distribution représentée sur la figure 2, décalée d'environ 90° par rapport à celle-ci et dans laquelle le corps de conteneur s'appui sur un support quelconque X-X′ par sa paroi latérale 21.

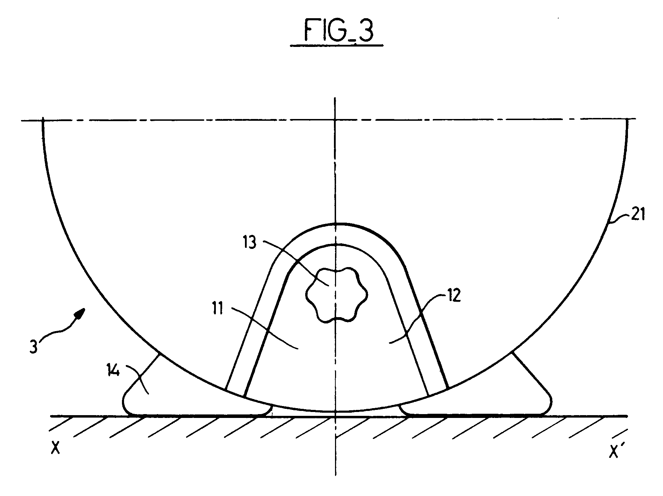

Selon la figure 3, pour éviter tout roulement dans cette position, le couvercle 3 de forme circulaire est muni sur sa périphérie de pattes 14 faisant saillie vers l'extérieur de part et d'autre du renfoncement 11.

Comme on peut le voir clairement sur la figure 2, dans cette position de distribution, le liquide 1 vient au niveau du robinet 13 et peut être soutiré selon la flèche A. Pour permettre cette opération, le couvercle 1 est par ailleurs muni d'une prise d'air 15 munie d'une soupape 16.

## Revendications

1. Conteneur isotherme adapté au transport et à la distribution de produits alimentaires liquides et apte à subir de nombreuses et importantes manipulations pouvant aller jusqu'à un parachutage sur le lieu de son utilisation, conteneur isotherme comportant un corps de conteneur (2) muni d'un fond (20) et de parois latérales (21) entourant ce dernier, un couvercle (3) coopérant notamment avec un joint d'étanchéité (8) et/ou avec des organes de fermeture (10) pour permettre de fermer le corps de conteneur (2) de façon étanche, ainsi qu'un robinet (13) coopérant avec une prise d'air (15) munie d'une soupape (16) de façon à permettre le soutirage du liquide présent dans le conteneur, le couvercle (3) et le corps de conteneur (2) comportant une paroi interne (4', 4) métallique inoxydable, le cas échéant amovible, destinée à être en contact avec les produits alimentaires, et une paroi externe (5', 5) antichocs en une matière plastique résistante ou un produit assimilable, notamment en polyéthylène haute densité, ces deux parois étant séparées par une couche d'un isolant thermique (6, 6'), notamment de mousse de polyuréthanne injectée entre les deux parois, conteneur isotherme caractérisé en ce que le couvercle (3) comporte, d'une part, sur sa périphérie externe, un renfoncement (11) dans lequel le robinet (13) est logé dans sa totalité de façon à permettre le soutirage du liquide contenu dans le corps de conteneur (2) lorsque, à partir de sa position de stockage normale dans laquelle il repose sur son fond (20), celui-ci est basculé dans une position de distribution dans laquelle il s'appuie sur ses parois latérales (21), le robinet (13) se trouvant alors à la partie inférieure du conteneur et, d'autre part, la prise d'air (15) coopérant avec le robinet (13) lors du soutirage du liquide.

2. Conteneur isotherme selon la revendication 1 caractérisé en ce qu'il est de forme cylindrique.

3. Conteneur isotherme selon l'une quelconque des revendications 1 et 2, caractérisé en ce que le couvercle (3) est muni, sur sa périphérie, de pattes (14) faisant saillie vers l'extérieur de part et d'autre du renfoncement (11) dans lequel est logé le robinet (13) pour stabiliser le conteneur en position de distribution.

## Claims

1. Insulated container suitable for transporting and dispensing liquid food products and capable of undergoing numerous and significant handling operations which may go as far as parachute-dropping on its place of use, the insulated container comprising a container body (2) having a base (20) and side walls (21) surrounding the latter, a lid (3), in particular cooperating with a leakproof seal (8) and/or with closure members (10) to allow the container body (2) to be closed in a leakproof manner, as well as a tap (13) cooperating with an air-inlet (15) having a valve (16) to allow drawing-off of the liquid present in the container, the lid (3) and the container body (2) comprising an inner non-oxidizable metal wall (4', 4), removable when necessary and intended to be in contact with the food products, and a shockproof outer wall (5', 5) of a strong plastics material or a similar product, particularly high-density polyethylene, these two walls being separated by a layer of a thermal insulator (6, 6'), particularly polyurethane foam injected between the two walls, the insulated container being characterized in that the lid (3) comprises, on the one hand, on its outer periphery, a recess (11) in which the tap (13) is housed in its entirety so as to permit the drawing-off of the liquid contained in the container body (2) when, starting from its normal storage position in which it rests on its base (20), it is tilted to a dispensing position in which it bears on its side walls (21), the tap (13) then being disposed on the lower portion of the container and, on the other hand, the air-inlet (15) cooperating with the tap (13) during the drawing-off of the liquid.

2. Insulated container according to Claim 1, characterized in that it is cylindrical in shape.

3. Insulated container according to any one of Claims 1 and 2, characterized in that the lid (3) has, on its periphery, feet (14) projecting outwardly on either side of the recess (11) in which the tap (13) is housed, in order to stabilize the container in the dispensing position.

## Patentansprüche

1. Isolierter Behälter für den Transport und die Ausgabe von flüssigen Nahrungsmitteln bei zahlreichen und heftigen Bewegungen, inclusive Fallschirmabwurf am Einsatzort, bestehend aus dem Behälterkörper (2) mit Boden (20), den Boden umgebenden Seitenflächen (21), Deckel (3) mit Dichtung (8) und/oder Verschlußvorrichtung (10) zum dichten Verschließen des Behälterkörpers (2), sowie einem Hahn (13) mit Lüftungsöffnung (15) und Ventil (16) zum Ablassen der im Behälter befindlichen Flüssigkeit, Deckel (3) und Behälterkörper (2) sind mit einer rostfreien metallischen Innenwand (4', 4), die ggf. beweglich ist und für den Kontakt mit den Nahrungsmitteln vorgesehen ist, und einer bruchsicheren Außenwand (5', 5) aus widerstandsfähigem Kunststoff oder vergleichbarem Material, insbesondere aus hochfestem Polyethylen, die beiden Wände sind durch eine Schicht Isoliermaterial (6, 6'), das insbesondere aus zwischen die beiden Wände eingespritzem Polyurethanschaum besteht, voneinander getrennt, gekennzeichnet dadurch, daß der Deckel (3) an seinem äußeren Rand aus einer Verstärkung (11), in die der Hahn (13) vollständig eingearbeitet ist, so daß die im Behälterkörper (2) befindliche Flüssigkeit abgelassen werden kann, wenn dieser aus seiner normalen Position, welche die auf dem Boden (20) aufsitzende ist, in eine Ausgabeposition gebracht wird, bei der er auf seinen Seitenflächen (21) liegt, der Hahn (13) befindet sich dann im unteren Teil des Behälters, und einer mit dem Hahn (13) beim Ablassen der Flüssigkeit zusammenspielende Lüftungsöffnung (15) besteht.

2. Isolierter Behälter nach Anspruch 1, gekennzeichnet dadurch, daß er zylindrisch geformt ist.

3. Isolierter Behälter nach einem der Ansprüche 1 oder 2, gekennzeichnet dadurch, daß der Deckel (3) am Rand mit über die den Hahn (13) aufnehmende Verstärkung hinausragenden Füßen (14) versehen ist, die den Behälter in seiner Ausgabeposition stabilisieren.
